# EUROPÄISCHE PATENTSCHRIFT

(11) **EP 0 659 370 B1**
(45) Veröffentlichungstag und Bekanntmachung des Hinweises auf die Patenterteilung: **12.08.1998**
(21) Anmeldenummer: 94120392.9
(22) Anmeldetag: 22.12.1994
(51) Int. Cl.: A47F 3/00, A47F 3/12, F16B 12/46, E05C 19/06

(54) **Vitrine zur Zurschaustellung von Gegenständen**
Show case for displaying goods
Vitrine pour la présentation de marchandises

(30) Priorität: 23.12.1993 DE 4344209
(43) Veröffentlichungstag der Anmeldung: 28.06.1995
(73) Patentinhaber: Glasbau Hahn GmbH & Co. KG, D-60314 Frankfurt (DE)
(72) Erfinder: Hahn, Thomas, D-60314 Frankfurt am Main (DE)
(74) Vertreter: Reichel, Wolfgang, Dipl.-Ing.

(56) Entgegenhaltungen:
- WO-A-91/07894
- GB-A- 2 228 965
- US-A- 1 471 167
- US-A- 4 426 816

## Beschreibung

Die Erfindung betrifft eine Vitrine zur Zurschaustellung von Gegenständen mit mehreren, aus durchsichtigem Material bestehenden Seitenwänden, von denen mindestens eine Seitenwand als drehbare, verschwenkbare oder abnehmbare Tür ausgebildet ist, und einem oben abschließenden Oberteil und einem unten abschließenden Unterteil.

Eine derartige Vitrine ist bereits bekannt. So wird in der DE-PS 36 02 539 eine Vitrine beschrieben, bei welcher auch eine Flügeltür vorgesehen werden kann, welche durch in geeignet vorgesehenen, undurchsichtigen Bereichen der aus Glas bestehenden Seitenwände angebrachte Scharniere drehbar gelagert ist. Eine weitere Möglichkeit eines Zugangs zum Innern der Vitrine besteht in der Anbringung einer Schiebetür.

Eine Vitrine hat nicht nur die Aufgabe, einen oder mehrere Gegenstände für eine große Anzahl von Menschen zur Schau zu stellen, wobei diese nicht nur sicher verwahrt und vorteilhaft beleuchtet werden können, vielmehr dient die Vitrine auch zur Aufbewahrung derselben, wobei die umgebende Luft eine bestimmte Luftfeuchtigkeit aufweisen und frei von Staub und chemischen Einflüssen sein sollte. Das bedeutet, daß an die Dichtigkeit der Vitrine gegenüber ihrer Umgebung große Anforderungen gestellt werden. Während Staub- oder besser noch die Luftdichtigkeit einer Vitrine bei der Herstellung des Vitrinengehäuses keine Schwierigkeiten bereitet, treten bei den Türen, die einen Zugang zum Inneren der Vitrine ermöglichen, Probleme auf. Besonders wenn die Tür aus Glas besteht ist es schwierig, eine gute Abdichtung an den Rändern zu erreichen, an denen die Tür am Vitrinengehäuse anliegt, da diese in den seltensten Fällen eine völlig plane Form aufweisen, ganz zu schweigen von den Fertigungstoleranzen.

Die Aufgabe der Erfindung besteht nun darin, eine Vitrine der eingangs genannten Art derart auszustalten, daß deren Tür unabhängig von einer planen Oberfläche und auch von Fertigungstoleranzen innerhalb eines gewissen Rahmens im geschlossenen Zustand dicht gehalten wird.

Diese Aufgabe wird dadurch gelöst, daß die Tür an denjenigen Stellen, an denen diese an den benachbarten Seitenwänden, dem Oberteil und dem Unterteil im geschlossenen Zustand anliegt, und die betreffenden Stellen der Seitenwände, des Oberteils und des Unterteils jeweils mit einem durchlaufenden Band versehen sind, wobei beide Bänder im geschlossenen Zustand der Tür fluchtend aufeinanderliegen und durch die besondere Ausbildung der beiden Bänder diese verrastend miteinander lösbar verbunden sind, und daß neben dem Band eine durchlaufende, elastische Dichtlippe vorhanden ist, welche im geschlossenen Zustand der Tür auf der Gegenseite abdichtend anliegt.

Dabei besteht das eine Band aus einem filzartigen Kunststoff-Vlies, in welches sich die unzähligen Haken des anderen Bandes nach dem Zusammenpressen beider Bänder einkrallen. Derartige Bänder sind auch unter dem Namen "Klettverschluß" bekannt. Das Lösen eines derartigen Verschlusses erfolgt normalerweise durch Auseinanderreißen der beiden miteinander verbundenen Teile. Dies ist jedoch bei dem vorliegenden Anwendungsfall nicht möglich. Hier erfolgt das Lösen der beiden Teile durch das Einschieben eines flachen Gegenstandes zwischen beide Bänder, beispielsweise eines Spachtels. Dabei kann unter Umständen die günstigste Bewegungsrichtung von der Richtung der gleichartig ausgerichteten Haken bestimmt sein. Durch die Bewegung des flachen Gegenstandes werden die Haken aus dem Vlies herausgezogen und können sich anschließend nicht mehr verkrallen, da die aufpressende Bewegung, die zum Verkrallen führt, nicht erfolgt.

In dem US-Patent 4,426,816 wird die Verwendung eines Klettverschlusses zur temporären Befestigung einer Glasscheibe auf einem Fenster oder einer Terassen- oder Verandatür beschrieben, wobei neben dem Klettverschluß ein elastischer Dichtungsstreifen verläuft, welcher eine luftdichte Verbindung zweier Glasscheiben bzw. der Glasscheibe mit der Lamellentür herstellen soll. Bei dem bekannten Anwendungsfall wird nicht auf eine gute, weitestgehende Luftdichtigkeit Wert gelegt, wie sie bei einer Vitrine verlangt wird, es genügt vielmehr eine einigermaßen luftdichte und zugfreie Abdichtung, zumal bei der Anbringung der zweiten Glasscheibe bei hoher Luftfeuchtigkeit die zwischen den beiden Glasscheiben befindliche Luft bei kalter Witterung sofort ein Beschlagen der Glasscheiben zur Folge hätte.

In der CH-PS 672 583 wird eine Vitrine zur Warenpräsentierung beschrieben, bei welcher eine Deckplatte mittels eines Klettverschlusses nur jeweils an den Enden der vier Eckprofile der Vitrine befestigbar ist.

Vorteilhafte Weiterbildungen der Erfindung ergeben sich aus den Unteransprüchen.

Die Erfindung wird anhand von mehreren Ausführungsbeispielen näher erläutert, welche in der Zeichnung dargestellt sind.
Es zeigt:
- Fig. 1: die perspektivische Ansicht einer Vitrine,
- Fig. 2: einen Querschnitt durch eine Tür und Seitenwände, wobei die Tür mit ihrer Innenseite auf den Stirnseiten der Seitenwände aufliegt,
- Fig. 3: einen Querschnitt durch eine Tür und Seitenwände, wobei die Tür an dem Stirnseite der einen Seitenwand mit ihrer Innenseite und an der Innenseite der anderen Seitenwand mit ihrer Stirnseite anliegt,
- Fig. 4: einen Querschnitt durch eine Tür und Seitenwände mit schrägen Auflageflächen,
- Fig. 5: einen Querschnitt durch eine Tür und eine Seitenwand, wobei eine Dichtlippe vorhanden ist,
- Fig. 6: einen Querschnitt durch eine Tür und eine Seitenwand, wobei zwei gegenüberliegende Dichtlippen vorhanden sind,
- Fig. 7: einen Querschnitt durch eine Tür und eine Seitenwand, wobei zwei nebenenanderliegende Dichtlippen vorhanden sind, und
- Fig. 8: einen Querschnitt durch eine Tür und ein Seitenwand, wobei zwei nebeneinander und gegenüberliegende Dichtlippen vorhanden sind.

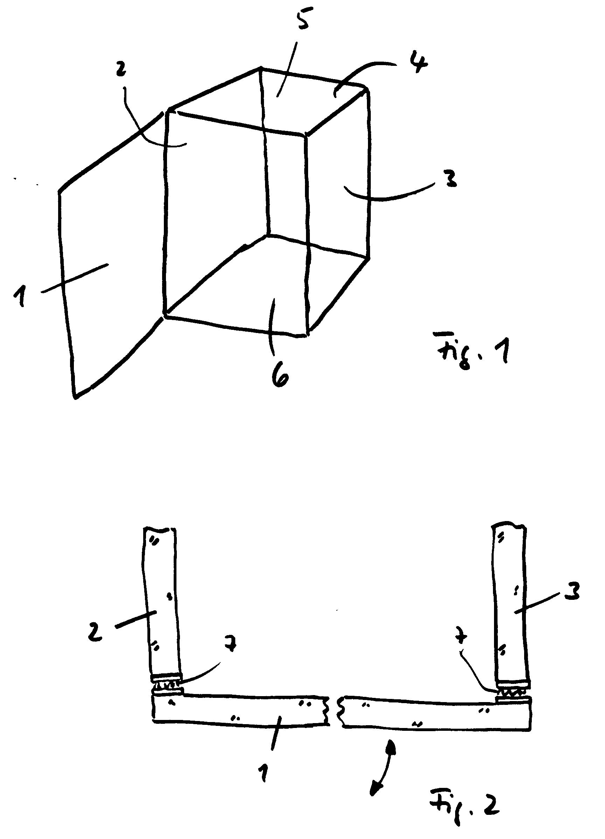

Die in Fig. 1 gezeigte Vitrine hat einen quadratischen oder rechteckigen Grundriß und besteht aus einer drehbaren Tür 1, einer linken Seitenwand 2, einer rechten Seitenwand 3, einer Rückwand 4, einem die Vitrine nach oben abschließenden Oberteil 5 und einem den Boden bildenden Unterteil 6. Die Tür 1, die Seitenwände 2 und 3, die Rückwand 4 und eventuell das Oberteil 5 können aus einem durchsichtigen Material bestehen, beispielsweise aus Glas. Die Tür 1 liegt an den senkrechten Stirnflächen der Seitenwäne 2 und 3 und im Bereich des Oberteils 5 und des Unterteils 6 jeweils an einem durchgehenden Materialstreifen bündig an, der beim Oberteil 5 und beim Unterteil 6 ebenfalls aus Glas, oder auch aus Metall oder aus Holz bestehen kann, dessen Breite mindestens der Materialstärke einer Seitenwand 2 oder 3 oder einer entsprechenden Verstärkung derselben entsprechen muß. Die Anwendung der weiter unten erläuterten Erfindung ist nicht auf Vitrinen mit rechteckigem oder quadratischen Grundriß beschränkt, sie kann auch bei mehreckigen Grundrissen benutzt werden.

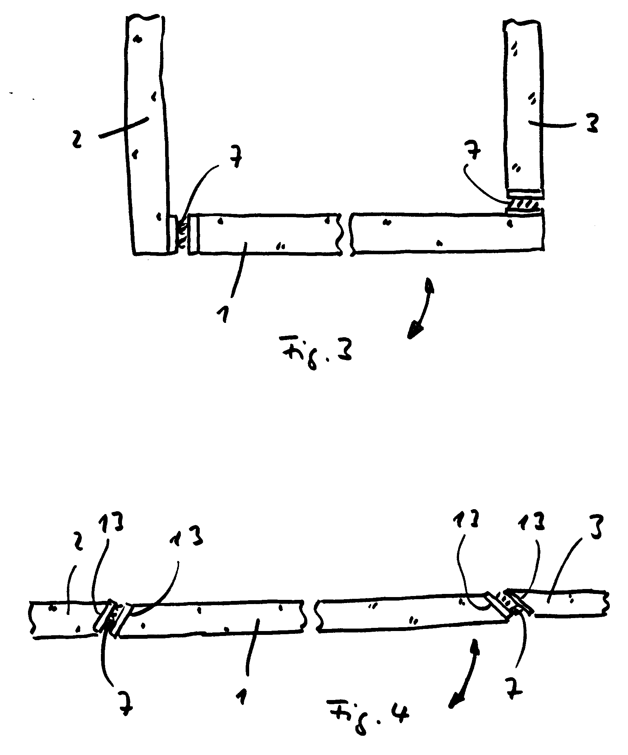

Bei dem in Fig.2 gezeigten Ausführungsbeispiel wird davon ausgegangen, daß die Tür 1, deren Stirnseite einerseits senkrecht an der Innenseite der linken Seitenwand 2 und andererseits senkrecht an der Stirnseite der rechten Seitenwand 3 anliegt, drehbar gelagert ist und zwar derart, daß diese sich von der Stirnseite der Seitenwand 3 wegbewegt. Dabei fluchtet im geschlossenen Zustand der Tür 1 die Stirnseite der linken Seitenwand 2 mit der Außenseite der Tür 1, deren Stirnseite wiederum mit der Außenseite der zweiten Seitenwand 3 abschließt. Die Vitrine kann dabei durch die Tür 1 durch ein entsprechend ausgebildetes Scharnier derart verschlossen werden, daß nach der Drehbewegung der Tür 1 diese im letzten Bewegungsbereich parallel auf die Stirnseiten der Seitenwände 2 und 3 zu bewegt wird, so daß die Verbindung der Tür 1 mit sämtlichen Berührungsstellen des Vitrinengehäuses gleichzeitig erfolgt.

Erfindungsgemäß wird nun das eine Band 7 durch Ankleben im Randbereich der linken Seitenwand 2 derart angebracht (Fig.2), daß dieses mit dem an der Stirnseite der Tür 1 angebrachten anderen Band 7 fluchtet. Das in großen Längen erhältliche Band 7 wird im gesamten Randbereich der Tür 1, entsprechend an den Seitenwänden 2 und 3, und durchgehend auch im Bereich von Oberteil 5 und Unterteil 6 angebracht, sodaß die Tür an ihrem Rand im geschlossenen Zustand derselben durchgehend mit der übrigen Vitrine lösbar und fest verbunden ist. Die Breite des Bandes richtet sich einmal nach der maximal zur Verfügung stehenden Breite der Stirnflächen und zu anderen nach der geforderten zu erzielenden Dichtigkeit oder Festigkeit der Verbindung. Es ist denkbar, durch Anbringen entsprechenden Materials die Stirnseite nach Bedarf zu verbreitern. Ebenso ist denkbar, parallel zu dem Band zusätzlich einen elastischen Dichtstreifen anzubringen, falls die geforderte Dichtigkeit durch das Band 7 allein nicht erreicht wird.

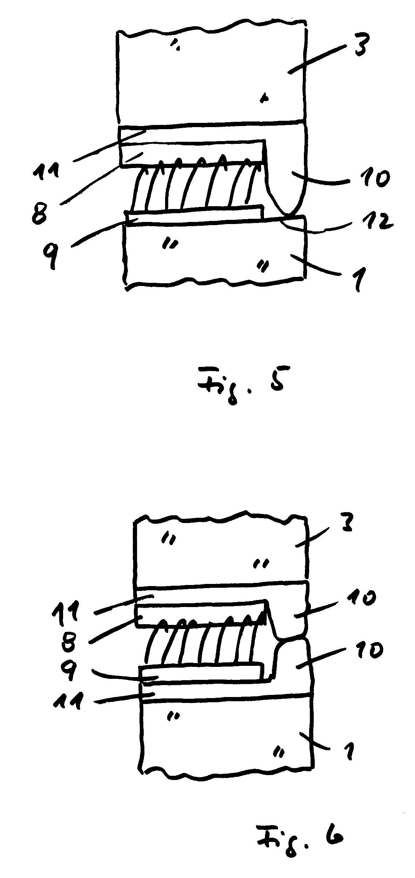

Bei dem Ausführungsbeispiel gemäß Fig. 3 wird von einem normalen Scharnier ausgegangen, mit Hilfe dessen die Tür 1 an dem Vitrinengehäuse befestigt ist. Dabei entspricht die Anordnung des Bandes 7 an der Tür 1 und an der rechten Seitenwand 3 der Anordnung gemäß Fig. 2. Die Tür 1 im Bereich der linken Seitenwand 2 stößt jedoch mit ihrer Stirnseite an die Innenseite der Seitenwand 2, so daß die Stirnseite der Seitenwand 2 bündig mit der Außenseite der Tür 1 abschließt. Der Drehpunkt der Tür 1 befindet sich dabei im Bereich der Stirnseite der Seitenwand 2.

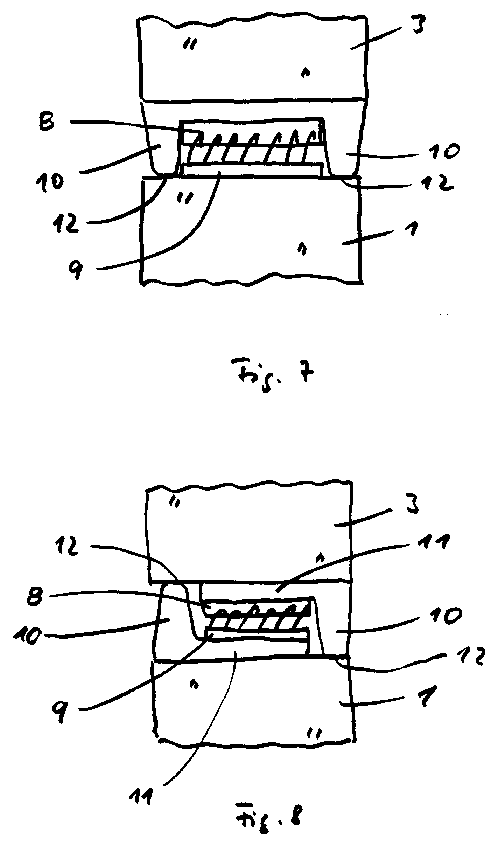

In Fig. 4 wird ein anderes Ausführungsbeispiel gezeigt, bei welchem die Auflageflächen der Tür 1 und der Seitenwände 2 und 3 als Schrägen 13 ausgebildet sind. Dabei fluchten die Außenseiten der Tür 6 mit den Seitenwänden 2 und 3. Es ist jedoch auch denkbar, daß die Tür 1 und die beiden Seitenwände 2 und 3 jeweils rechtwinklig zueinander angeordnet sind. In beiden Fällen ist wiederum das eine Band 7 jeweils an der Schrägfläche 13 der Tür 1 und das andere Band 7 an der Schrägfläche 13 der gegenüberliegenden Seitenflächen 2 bzw. 3 und des Oberteils 5 und des Unterteils 6 angebracht. Die Tür 1 kann wiederum um ein nicht gezeigtes Scharnier drehbar nach außen ausgebildet sein, es ist jedoch auch möglich die Tür als Luke ohne Scharnier in eine entsprechend geformte Öffnung einzusetzen, wobei die Schrägen 13 als Anschlag dienen, sodaß sich die Tür 1 im eingesetzten Zustand mit ihrer Außenseite fluchtend zu den Außenseiten der beiden Seitenflächen 2 und 3 und des Oberteils 5 und des Unterteils 6 befindet. Dabei können sämtliche Seiten der Tür 1 mit Schrägen 13 und Bändern 7 versehen sein.

Das Band 7 ist als sogenannter "Klettverschluß" ausgebildet und besteht aus zwei Bändern 8 und 9 (Fig. 5 bis 8), von denen das eine Band 8 aus einem filzartigen Kunststoff-Vlies entsprechender Dicke besteht und das andere Band 9 aus einem Gewebestreifen mit eingewebten Haken gebildet wird, welche in der Regel nach einer Richtung ausgerichtet sind. Durch Aufeinanderpressen der beiden Bänder 8 und 9 verkrallen sich die Haken in dem Vlies, wodurch eine Verrastung zwischen beiden Bändern entsteht, welche durch Auseinanderreißen der beiden Bänder wieder lösbar ist. Jeweils ein Band wird an einem Gegenstand durch beispielsweise Ankleben oder auch Annähen befestigt. Auf diese Weise lassen sich z.B. Schuhe, Geldbörsen, Kleidungsstücke schnell verschließen und öffnen.

Die Freigabe der Tür, d.h. das Lösen der Verbindung zwischen den beiden Bändern 8 und 9 erfolgt durch Einschieben eines flachen Gegenstandes, beispielsweise eines Spachtels zwischen die beiden Bänder 8 und 9, wodurch die Haken aus dem Vlies herausgezogen werden. Nach dem Durchziehen des flachen Gegenstandes können die Haken nicht mehr in das Vlies eindringen und sich erneut verrasten, da die Anpreßbewegung, die ursprünglich zur Verbindung der beiden Bänder 8 und 9 miteinander geführt hat, nicht mehr vorhanden ist.

Es ist selbstverständlich, daß die Befestigung der Bänder 8 und 9 auf der Tür 1 und den Seitenwänden 2 und 3, dem Obterteil 5 und dem Unterteil 6 derart erfolgen muß, daß die auf die Tür einwirkenden Kräfte nicht zu einer Ablösung der Bänder 8 und 9 führen.

Ist nun durch die Bänder 8 und 9 keine ausreichende Abdichtung zwischen Tür 1 und dem übrigen Vitrinengehäuse erreichbar, so kann zur Abdichtung eine zusätzlich neben dem Band 7 verlaufende, durchgehende Dichtlippe 10 vorgesehen werden, welche nach Fig. 5 an der Stirnseite der rechten Seitenwand 3 neben dem Vliesteil 8 angebracht ist und bei einer Verbindung zwischen Vliesteil 8 und dem an der Innenseite der Tür 1 angebrachten Hakenteil 9 auf eine durchlaufende Fläche 12 auf der Innenseite der Tür 1 drückt. Die Dichtlippe 10 besteht aus einem elastischen Material beispielsweise aus Silikon und kann Bestandteil eines durchlaufenden Profilstreifens 11 sein, mit welchem die Dichtlippe 10 einstückig verbunden ist.

Es ist auch denkbar, zwei gegenüberliegende Dichtlippen 10 vorzusehen, welche im verbundenen Zustand von Vliesteil 8 und Hakenteil 9 gegeneinander pressen (Fig. 6).

Eine weitere Möglichkeit der Anordnung der Dichtlippen 10 besteht darin, diese parallel auf beiden Seiten des Vliesteils 8 anzuordnen, sodaß diese dann im verbundenen Zustand von Vliesteil 8 und Hakenteil 9 auf jeweils eine durchlaufende Fläche 12 pressen, die sich auf beiden Seiten des Hakenteils 9 auf der Innenseite der Tür 1 befindet (Fig. 7).

Weiterhin ist denkbar, auf beiden Seiten der Verbindung jeweils eine Dichtlippe 10 anzuordnen, sodaß sich jeweils auf der einen Seite des Vliesteils 8 und des Hakenteils 9 eine Dichtlippe 10 und auf der gegeüberliegenden Seite eine durchlaufende Fläche 12 befindet (Fig.8).

Bisher wurde davon ausgegangen, daß ein durchlaufender, eine oder auch zwei Dichtlippen 10 aufweisender Profilstreifen 11 auf der Stirnseite oder der Innenseite einer Seitenwand oder der Tür durch Ankleben angebracht wird, wobei der Profilstreifen 11 ebenso wie die Dichtlippe 10 aus einem elastischen Material besteht. Die durchlaufende Fläche 12 kann entweder durch die Innenseite oder Stirnseite der Tür bzw. Seitenwand selbst gebidet werden oder ebenfalls einen Teil des Profilstreifens 11 bilden. Es ist jedoch auch denkbar, die Dichtlippe 10 und eventuell auch das gesamte Profil des Profilstreifens 11 aus formbaren Silikon herzustellen, indem vor dem Aushärten desselben mittels eines entsprechend geformten Spachtels das Silikon in die gewünsche Profilform gebracht wird, indem die Innenseite oder Stirnseite von Tür bzw. Seitenwand als Führung beim Entlangbewegen des Spachtels benutzt wird.

Der Profilstreifen 11 ungeachtet seiner Herstellung kann nun entweder mit einer Auflage für das Vlies- bzw. Hakenteil ausgebildet sein oder das Vlies- oder Hakenteil wird direkt auf die Innenseite oder Stirnseite von Tür oder Seitenwand aufgebracht und mit dieser befestigt. In diesem Fall beschränkt sich das Profilteil 11 auf die Dichtlippe 10.

## Patentansprüche

1. Vitrine zur Zurschaustellung von Gegenständen mit mehreren, aus durchsichtigem Material bestehenden Seitenwänden (2,3), von denen mindestens eine Seitenwand als drehbare, verschwenkbare oder abnehmbare Tür (1) ausgebildet ist, und einem oben abschließenden Oberteil (5) und einem unten abschließenden Unterteil (6),
dadurch gekennzeichnet,
daß die Tür (1) an denjenigen Stellen, an denen diese an den benachbarten Seitenwänden (2,3), dem Oberteil (5) und dem Unterteil (6) im geschlossenen Zustand anliegt, und die betreffenden Stellen der Seitenwände (2,3), des Oberteils (5) und des Unterteils (6) jeweils mit einem durchlaufenden Band (7) versehen sind, wobei beide Bänder (7) im geschlossenen Zustand der Tür (1) fluchtend aufeinanderliegen und durch die besondere Ausbildung der beiden Bänder (7) diese verrastend miteinander lösbar verbunden sind, und daß neben dem Band (7) eine durchlaufende, elastische Dichtlippe (10) vorhanden ist, welche im geschlossenen Zustand der Tür (1) auf der Gegenseite abdichtend anliegt.

2. Vitrine nach Anspruch 1,
dadurch gekennzeichnet,
daß auf der Gegenseite eine durchlaufende Fläche (12) vorgesehen ist, gegen welche sich die Dichtlippe (10) im geschlossenen Zustand der Tür (1) anlegt.

3. Vitrine nach Anspruch 1,
dadurch gekennzeichnet,
daß neben dem Band (7) auf der Tür (1) und und auf den Seitenwänden (2,3), dem Oberteil (5) und dem Unterteil (6) jeweils eine durchlaufende Dichtlippe (10) angebracht ist, wobei im geschlossenen Zustand der Tür (1) beide Dichtlippen (10) fluchtend aufeinanderliegen.

4. Vitrine nach einem der Ansprüche 2 oder 3,
dadurch gekennzeichnet,
daß jeweils auf beiden Seiten des Bandes (7) jeweils eine Dichtlippe (10) angebracht ist.

5. Vitrine nach einem der Ansprüche 1 bis 4,
dadurch gekennzeichnet,
daß eine, mit der Außenseite der Tür (1) fluchtend abschließende erste Seitenwand (2) auf deren Innenseite und eine an deren Innenseite anstoßende Stirnseite der Tür (1) jeweils mit einem Band (7) versehen sind.

6. Vitrine nach einem der Ansprüche 1 bis 5,
dadurch gekennzeichnet,
daß die mit der Außenseite einer weiteren Seitenwand (3) fluchtend abschließenden Tür (1) auf deren Innenseite und die Stirnseite dieser Seitenwand (3) jeweils mit einem Band (7) versehen sind.

7. Vitrine nach Anspruch 1,
dadurch gekennzeichnet,
daß die Außenseiten der Tür (1) und der Seitenwände (2,3) fluchtend angeordnet sind und daß mindestens die beiden gegenüberliegenden Stirnseiten der Tür (1) und die entsprechenden Stirnseiten der Seitenwände (2,3) jeweils miteinander fluchtende nach außen gerichtete Schrägen (13) aufweisen, wobei die Schrägen der Tür (1) und der Seitenwände (2,3) jeweils mit einem Band (7) versehen sind.

8. Vitrine nach einem der Ansprüche 1 bis 7,
dadurch gekennzeichnet,
daß die Dichtlippe (10) mit einem umlaufenden, elastischen Profilteil (11) einstückig verbunden ist, welches auf die Tür (1), die Seitenwände (2,3), das Oberteil (5) bzw. das Unterteil (6) aufklebbar ist, und daß das Band (7) auf dem elastischen Profilteil (11) befestigt ist.

9. Vitrine nach einem der Ansprüche 1 bis 7,
dadurch gekennzeichnet,
daß die Dichtlippe (8) aus einem im frischen Zustand verformbaren und später aushärtbaren Dichtungsmaterial besteht, welches durch einen entsprechend geformten Spachtel an der Außenkante der Tür (1) bzw. an den Kanten der Seitenflächen (2,3), des Oberteils (5) und des Unterteils (6) entlanggleitend geformt wird.

10. Vitrine nach einem der Ansprüche 1 bis 9,
dadurch gekennzeichnet,
daß das Band (7) als sogenanntes "Klettband" ausgebildet ist.

## Claims

1. Showcase for displaying articles, with a plurality of side walls (2,3) consisting of transparent material, of which at least one side wall is in the form of a rotatable, pivotable or removable door (1), and an upper portion (5) closing at the top and a lower portion (6) closing at the foot, characterised in that
the door (1), at those points at which it abuts on the adjacent side walls (2,3), the upper portion (5) and the lower portion (6) in the closed condition, and the relevant points of the side walls (2,3), of the upper portion (5) and of the lower portion (6), are respectively provided with the continuous tape (7), both tapes (7) in the closed condition of the door (1) abutting flush on one another and due to the special design of the two tapes (7), these latter are connected together in an engaged and detachable manner, and in that next to the tape (7) there is present a continuous resilient seal lap (10), which in the closed condition of the door (1) abuts in a sealing manner on the opposite side.

2. Showcase according to claim 1,
characterised in that
on the opposite side there is provided a continuous surface (12), against which the seal lip (10) is applied in the closed condition of the door (1).

3. Showcase according to claim 1,
characterised in that
there is attached respectively next to the tape (7) on the door (1) and on the side walls (2,3) the upper portion (5) and the lower portion (6), a continuous seal lip (10), both seal lips (10) abutting flush on one another in the closed condition of the door (1).

4. Showcase according to one of claims 2 or 3,
characterised in that
a respective seal lip (10) is attached on both sides of the tape (7).

5. Showcase according to one of claims 1 to 4,
characterised in that
a first side wall (2) abutting flush with the outer side of the door (1) is provided on its inner side, and an end face of the door (1) abutting on its inner side, are respectively provided with a tape (7).

6. Showcase according to one of claims 1 to 5,
characterised in that
the door (1) closing flush with the outer side of a further side wall (3), is provided on its inner side, and the end face of the side wall (3) is provided with a tape (7) in each case.

7. Showcase according to claim 1,
characterised in that
the outer sides of the door (1) and of the side walls (2,3) are arranged flush, and in that at least the two end faces lying opposite one another of the door (1) and the corresponding end faces of the side walls (2,3) have respective outwardly directed obliques (13) flush with one another, the obliques of the door (1) and of the side walls (2,3) being respectively provided with the tapes (7).

8. Showcase according to one of claims 1 to 7,
characterised in that
the seal lip (10) is integrally connected to a surrounding resilient profile portion (11), which may be attached by gluing to the door (1), the side walls (2,3), the upper portion (5) or the lower portion (6), and in that the tape (7) is secured on the elastic profiled portion (11).

9. Showcase according to one of claims 1 to 7,
characterised in that
the seal lip (8) consists of a seal material which is deformable in the fresh condition and is later hardenable, which is shaped by sliding a correspondingly shaped spatula along the outer side of the door (1) or the edges of the side faces (2,3) of the upper portion (5) and of the lower portion (6).

10. Showcase according to one of claims 1 to 9,
characterised in that
the tape (7) is in the form of a so-called "Velcro-type closure".

## Revendications

1. Vitrine pour la présentation d'objets, comprenant plusieurs parois latérales (2, 3) réalisées dans un matériau transparent dont au moins l'une des parois latérales est réalisée comme porte (1) pivotante, orientable ou amovible, et une partie supérieure (5) fermant en haut et une partie inférieure (6) fermant en bas, caractérisée en ce que la porte (1) aux endroits auxquels celle-ci est adjacente, à l'état fermé, aux parois latérales (2, 3) contiguës, à la partie supérieure (5) et à la partie inférieure (6), ainsi que les endroits correspondants des parois latérales (2, 3), de la partie supérieure (5) et de la partie inférieure (6) sont respectivement munis d'un ruban (7) continu, les deux rubans (7) étant superposés et alignés à l'état fermé de la porte (1) et étant assemblés l'un avec l'autre de manière amovible en adhérant l'un contre l'autre en raison de la réalisation particulière des deux rubans (7) et en ce qu'en plus du ruban (7), il existe une lèvre d'étanchéité (10) continue et élastique qui, à l'état fermé de la porte (1), est adjacente de manière étanche sur le côté opposé.

2. Vitrine selon la revendication 1, caractérisée en ce que sur le côté opposé, il est prévu une surface (12) continue contre laquelle s'appuie la lèvre d'étanchéité (10) à l'état fermé de la porte (1).

3. Vitrine selon la revendication 1, caractérisée en ce que, en plus du ruban (7), une lèvre d'étanchéité (10) continue est appliquée respectivement sur la porte (1) et sur les parois latérales (2, 3), sur la partie supérieure (5) et la partie inférieure (6), les deux lèvres d'étanchéité (10) étant superposées et alignées à l'état fermé de la porte (1).

4. Vitrine selon la revendication 2 ou 3, caractérisée en ce que respectivement sur les deux côtés du ruban (7) est prévue respectivement une lèvre d'étanchéité (10).

5. Vitrine selon l'une quelconque des revendications 1 à 4, caractérisée en ce qu'une première paroi latérale (2), fermant en alignement avec le côté extérieur de la porte (1), est munie sur son côté intérieur, d'un ruban (7) et en ce qu'un côté frontal de la porte (1) touchant le côté intérieur de la paroi latérale l'est également.

6. Vitrine selon l'une quelconque des revendications 1 à 5, caractérisée en ce que la porte (1) fermant en alignement avec le côté extérieur d'une autre paroi latérale (3) est munie sur son côté intérieur d'un ruban (7) et en ce que le côté frontal de cette paroi latérale (3) l'est aussi.

7. Vitrine selon la revendication 1, caractérisée en ce que les côtés extérieurs de la porte (1) et des parois latérales (2, 3) sont disposés en alignement et en ce que, au moins les deux côtés frontaux opposés de la porte (1) et les côtés frontaux correspondants des parois latérales (2, 3) présentent respectivement des biseaux (13) alignés l'un avec l'autre et orientés vers l'extérieur, les biseaux de la porte (1) et des parois latérales (2, 3) étant respectivement munis d'un ruban (7).

8. Vitrine selon l'une quelconque des revendications 1 à 7, caractérisée en ce que la lèvre d'étanchéité est assemblée d'un seul bloc avec un élément profilé (11) périphérique et élastique qui peut être collé sur la porte (1), sur les parois latérales (2, 3), sur la partie supérieure (5) et la partie inférieure (6) et en ce que le ruban (7) est fixé sur l'élément profilé (11) élastique.

9. Vitrine selon l'une quelconque des revendications 1 à 7, caractérisée en ce la lèvre d'étanchéité (8) est réalisée dans une matière d'étanchéité qui est déformable à l'état frais et durcissable ultérieurement et qui est façonnée par une spatule formée en conséquence, glissant le long du bord extérieur de la porte (1) et des bords des surfaces latérales (2, 3), de la partie supérieure (5) et de la partie inférieure (6).

10. Vitrine selon l'une quelconque des revendications 1 à 9, caractérisée en ce que le ruban (7) est ce que l'on appelle un "ruban Velcro".
